# EUROPEAN PATENT APPLICATION

(11) **EP 1 732 327 A1**
(43) Date of publication of application: **13.12.2006**
(21) Application number: 04821718.6
(22) Date of filing: 08.12.2004
(51) Int. Cl.: H04N 7/24

(54) **ENCODED DATA DECODING APPARATUS**

(30) Priority: 09.03.2004 JP 2004066190
(71) Applicant: MATSUSHITA ELECTRIC INDUSTRIAL CO., LTD., Kadoma-shi, Osaka Osaka 571-0051 (JP)
(72) Inventor: HOASHI, Katsumi c/o Mat. Elec. Ind. Co., Ltd., Osaka-shi, Osaka 540-6319 (JP); YAMAGUCHI, Ryoji c/o Mat. Elec. Ind. Co., Ltd., Osaka-shi, Osaka 540-6319 (JP)
(74) Representative: Grünecker, Kinkeldey, Stockmair & Schwanhäusser Anwaltssozietät
(86) International application number: PCT/JP2004/018261
(87) International publication number: WO 2005/086485

(57) **Abstract**

There are included an image decoder **(10)** for decoding encoded image data; a processor **(11)** for performing both a partial decoding of encoded image data and a control of the image decoder **(10);** an internal command memory **(12)** for storing programs to be executed by the processor **(11);** an external command memory **(13)** for storing all of programs to be transferred to a RAM area of the processor **(11);** and a frame memory **(14)** for storing decoded data outputted from the image decoder **(10).** The programs used for decoding the encoded image data are divided into functional module units. While the programs are interchanged from the external command memory **(13)** to the internal command memory **(12)** for each of predetermined command memory transfer unit during reproduction, the encoded image data is decoded.

## Description

### TECHNICAL FIELD

The present invention relates to an encoded data decoding apparatus for decoding compression-encoded data, and more particularly, to a method of using a command memory of a processor which performs a decoding control of encoded data.

### BACKGROUND ART

Conventionally, as an encoding technique of compressing a digital image signal, the MPEG (Moving Picture Experts Group) technique specified in ISO/IEC11172,13818 has been known. In the MPEG technique, a stream is composed of a total of six layers: a sequence layer beginning with a sequence header; a GOP layer beginning with a GOP (Group Of Pictures) header; a picture layer beginning with a picture header; a slice layer beginning with a slice header; a macroblock layer; and a block layer which is the smallest unit. The sequence layer is for specifying a picture format and the like and includes a group of a series of pictures having the same attribute. The GOP layer is the smallest picture group unit which serves as a reference for random access. The picture layer is a common attribute for a single picture, and this picture is composed of three kinds of pictures (I, P and B). Here, the I-picture is an intraframe encoded image, the P-picture is an interframe forward-direction predictive encoded image, and the B-picture is an interframe bidirectionally predictive encoded image.

Apparatuses which decode encoded audio data as well as encoded image data often implement a function of decoding audio with software executed by a processor and a function of decoding images with dedicated hardware (image decoder), and comprise an external memory (frame memory) for storing image data for image decoding.

An image/audio decoding apparatus for which an external memory is provided for storing a plurality of audio decoding programs and image data and which comprises a processor for decoding audio based on an audio decoding program stored in a command memory, an image decoder for decoding image data, and an arbitration circuit for arbitrating accesses of the processor and the image decoder to the external memory, so as to support a plurality of audio compression-encoding techniques, has been known. According to this apparatus, when an image is decoded, image decoding data stored in the external memory is used, and when switching to an audio decoding program, an audio decoding program stored in the external memory is loaded into the command memory. Thereby, even when the number of programs for decoding compression-encoded audio is increased, audio decoding can be performed without an increase in the scale of the command memory and the number of terminals (see Patent Document 1).
Patent Document 1: Japanese Patent Unexamined Publication No. 2002-278599

### DISCLOSURE OF THE INVENTION

### PROBLEMS TO BE SOLVED BY THE INVENTION

There are various standards not only for audio compression-encoding techniques but also for image compression-encoding techniques. For example, in the case of reproduction of digital television, when a reproduction control of image and audio is performed using a single processor, a command memory having a size corresponding to the size of a program is assumed to be provided. In this case, a command memory into which both an image decoding program and an audio decoding program can be read is prepared, i.e., a considerably large command memory is required. Also, when a processor is of a DSP type, and a portion of a process of decoding encoded image data is processed by software using a processor, it is necessary to prepare a program for each kind of encoded image data, so that a command memory having an even larger capacity is required. This leads to an increase in hardware scale, i.e., an increase in cost of hardware.

This problem can be relaxed to some extent by, for example, using a ROM (Read Only Memory) as a command memory instead of a RAM (Random Access Memory). However, in the situation where various standards are appearing, when a program is put into a ROM of a processor, it is necessary to reconstruct a chip so as to support new standards, leading to a problem in time and the number of steps, i.e., it is not advantageous in terms of speed of supporting new standards.

An object of the present invention is to reduce the capacity of a command memory which is used by a processor which controls decoding of compression-encoded data when the encoded data is reproduced.

### SOLUTION TO THE PROBLEMS

To achieve the object, an encoded data decoding apparatus according to the present invention decodes encoded data while dynamically interchanging programs in a command memory during reproduction. Specifically, a program used in decoding of encoded image data and/or encoded audio data is divided into module units, and the encoded data is decoded while interchanging programs in the internal command memory for each predetermined command memory transfer unit.

### EFFECT OF THE INVENTION

According to the present invention, the capacity of the internal command memory can be reduced, thereby making it possible to suppress an increase in cost of a system.

### BRIEF DESCRIPTION OF THE DRAWINGS

FIG. 1 is a block diagram illustrating an exemplary configuration of an encoded image data decoding apparatus according to the present invention.
FIG. 2 is a diagram illustrating a configuration of a program executed by a processor of FIG. 1.
FIG. **3** is a diagram illustrating an arrangement of program modules in an internal command memory of FIG. **1.**
FIG. **4** is a timing diagram illustrating an exemplary operation of the decoding apparatus of FIG. **1.**
FIG. **5** is a control flow diagram of interchanging of programs in the decoding apparatus of FIG. **1.**
FIG. **6** is another control flow diagram of interchanging of programs in the decoding apparatus of FIG. **1.**
FIG. **7** is a block diagram illustrating an exemplary configuration of an encoded image/audio data decoding apparatus of the present invention.
FIG. **8** is a diagram illustrating a configuration of a program which is executed by a processor of FIG. **7.**
FIG. **9** is a diagram illustrating an arrangement of program modules in an internal command memory of FIG. **7.**
FIG. **10** is a timing diagram illustrating an exemplary operation of the decoding apparatus of FIG. **7.**
FIG. **11** is a timing diagram illustrating another exemplary operation of the decoding apparatus of FIG. **7.**
FIG. **12** is a diagram illustrating another configuration of a program which is executed by the processor of FIG. **7.**
FIG. **13** is a timing diagram illustrating an exemplary operation of the decoding apparatus of FIG. **7** when the program configuration of FIG. **12** is employed.

### DESCRIPTION OF THE REFERENCE CHARACTERS

- **10**: image decoder
- **11**: processor
- **12**: internal command memory
- **13**: external command memory
- **14**: frame memory

### BEST MODE FOR CARRYING OUT THE INVENTION

Hereinafter, embodiments of the present invention will be described with reference to the accompanying drawings.

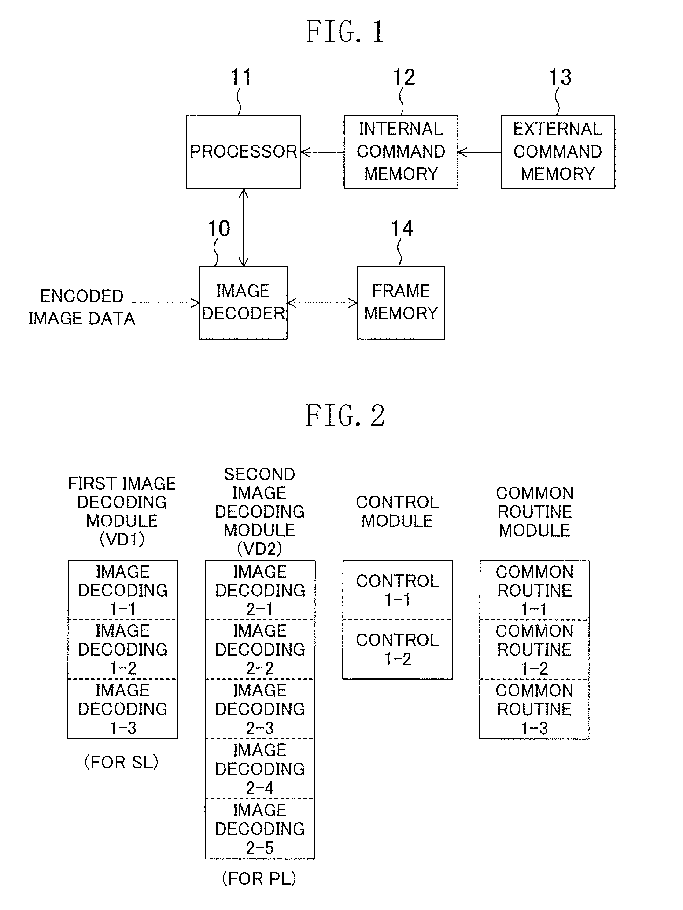

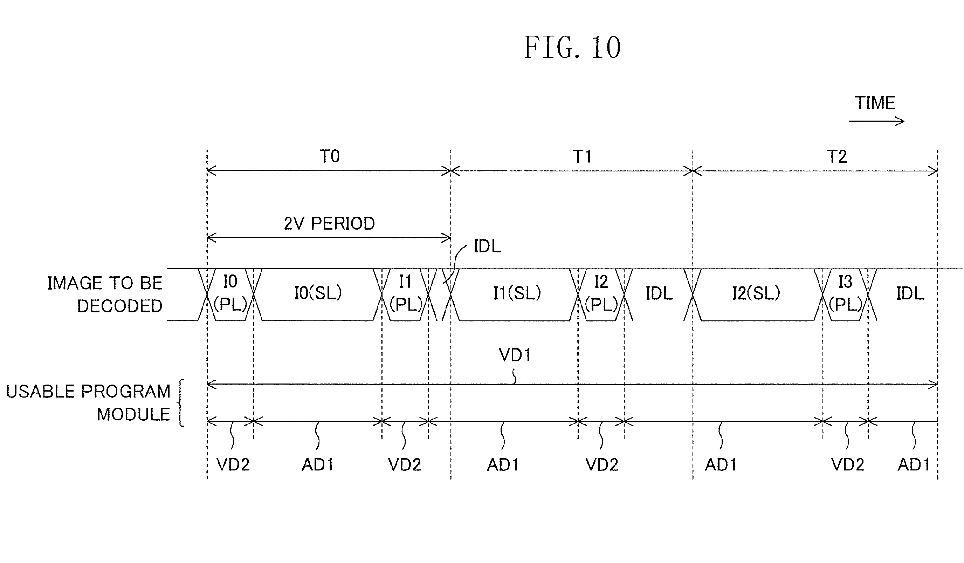

FIG. **1** illustrates an exemplary configuration of an encoded image data decoding apparatus according to the present invention. The apparatus decodes image data encoded with the MPEG technique, in real time. In FIG. **1, 10** indicates an image decoder for decoding encoded image data, **11** indicates a processor for performing only a control of the image decoder **10,** or both a process of decoding a portion of encoded image data and a control of the image decoder **10, 12** indicates an internal command memory for storing a portion of programs of the processor **11, 13** indicates an external command memory for storing all programs of the processor **11** (excluding programs stored in a ROM area of the internal command memory **12),** and **14** indicates a frame memory for storing decoded data outputted from the image decoder **10.** Note that the image decoder **10,** the processor **11,** and the internal command memory **12** are configured into a single system LSI.

FIG. **2** illustrates a configuration of a program executed by the processor **11** of FIG. **1.** According to FIG. **2,** the program is divided into four functional modules. Specifically, the four functional modules are: first and second image decoding modules (VD1, VD2) for actually decoding encoded image data; a control module for switching threads of the first and second image decoding modules (VD1, VD2) or interchanging programs of the internal command memory **12;** and a common routine module which is used in common by the first and second image decoding modules (VD1, VD2). The first image decoding module (VD1) is a program module for decoding the slice layer (SL) and lower, and the second image decoding module (VD2) is a program module for decoding the picture layer (PL) and higher. Note that each module is divided with dashed lines of FIG. **2** into portions which are transfer units (hereinafter referred to as sub-modules) when a program is transferred from the external command memory **13** to the internal command memory **12.**

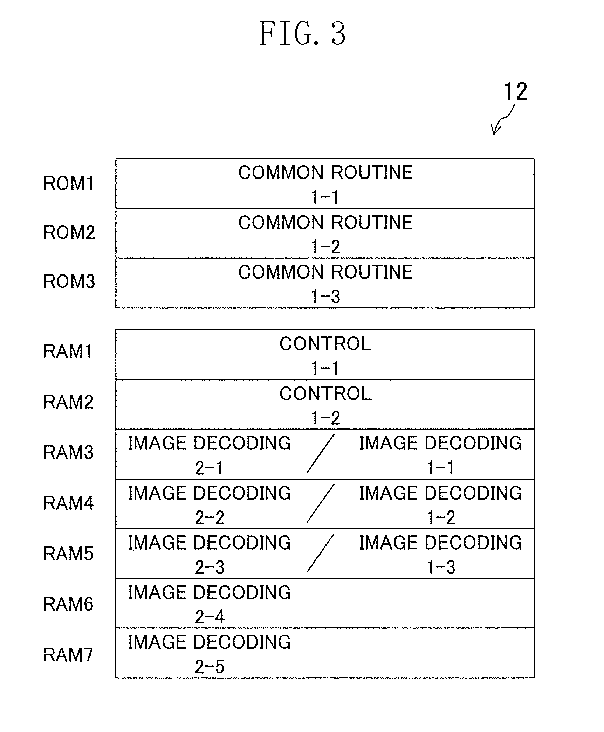

FIG. **3** illustrates an arrangement of program modules in the internal command memory **12** of FIG. **1.** Here, the first image decoding module (VD1) and the second image decoding module (VD2) of FIG. **2** are used while interchanging therebetween is performed in a portion (RAM3 to RAM7) of a RAM area of the internal command memory **12.** The control module is placed in a non-interchange area (resident area: RAM1 to RAM2) in the RAM area, and interchanging is not performed during reproduction. The common routine module is assumed to be placed in a ROM area (ROM1 to ROM3) of the internal command memory **12.**

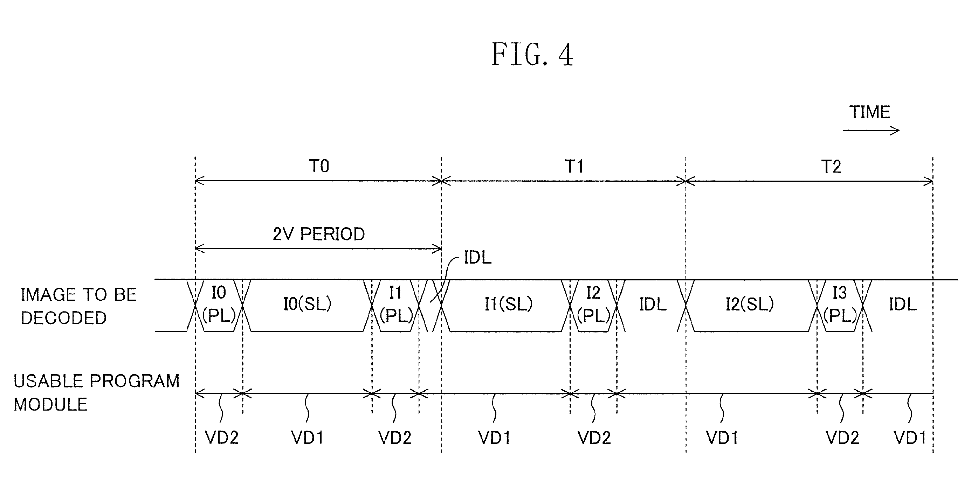

FIG. **4** illustrates an exemplary operation of the encoded image data decoding apparatus of FIG. **1.** In FIG. **4,** T0, T1, and T2 each indicate a 2V period (= 1 frame period). It is assumed that one frame of encoded image data is decoded during each 2V period. 10,11, 12, and 13 each indicate an I-picture, and IDL indicates an idling state of the processor **11.**

According to FIG. **4,** initially, in order to start decoding 10 (PL), a program of the second image decoding module (VD2) required at the start of decoding is read into RAM3 to RAM7 of the internal command memory **12.** After 10 (PL) is completely decoded, a program of the first image decoding module (VD1) is read into RAM3 to RAM5 of the internal command memory **12** so as to start decoding 10 (SL). After 10 (SL) is completely decoded, since the second image decoding module (VD2) is required to decode I1 (PL), the program of the second image decoding module (VD2) is read into the internal command memory **12.** In this case, two sub-modules 2-4 and 2-5 of the second image decoding module (VD2) are already read into RAM6 and RAM7 of the internal command memory **12,** so that these two sub-modules are not read and reading is performed only for RAM3 to RAM5. At the time when I1 (PL) is completely decoded in this manner, the program executing state of the processor **11** is in the idling state, and therefore, the program of the first image decoding module (VD1) which is a next required functional module is read into RAM3 to RAM5 of the internal command memory **12** in advance on this stage, and is in the idling state until the start of decoding. Next, I1 (SL) is decoded, and thereafter, since the second image decoding module (VD2) is required so as to decode I2 (PL), the program of the second image decoding module (VD2) is read into RAM3 to RAM7 of the internal command memory **12.** Thereafter, a similar operation is repeatedly performed to perform decoding.

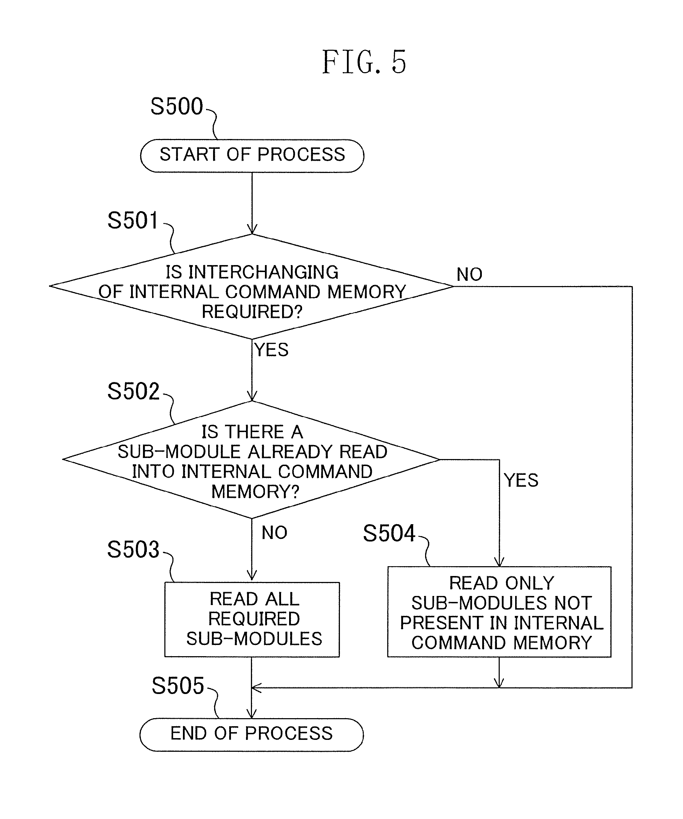

Alternatively, the program of the first image decoding module (VD1) may be read into RAM3 to RAM5 of the internal command memory **12** after waiting until the start of decoding the I1 (SL). FIG. **5** is a control flow diagram of interchanging of programs in this case. According to FIG. **5,** initially, the process is started in S500, and thereafter, in S501, it is determined whether or not interchanging of the internal command memory **12** is required, and if interchanging of the internal command memory **12** is not required, the process is ended in S505. When it is determined in S501 that interchanging of the internal command memory **12** is required, it is determined in S502 whether or not a sub-module(s) of a functional module which needs to be thereafter read is already read into the internal command memory **12,** and when no required sub-module is already read, all sub-modules of the next required functional module are read in S503, and the process is ended in S505. When a required sub-module(s) is already read in S502, a sub-module(s) other than the already read sub-module(s) of the next required functional module is read in S504, and the process is ended in S505.

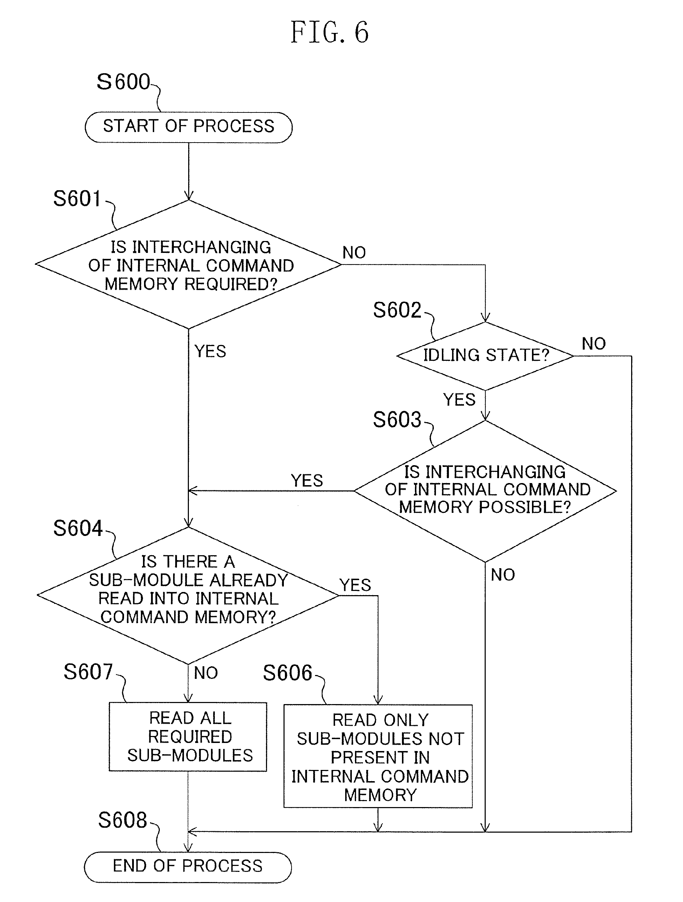

FIG. **6** is a control flow diagram of interchanging of programs when the read-ahead technique of FIG. **4** is employed. Steps S600 to S608 of FIG. **6** excluding S602 and S603 correspond to steps S500 to S505 of FIG. **5.** According to FIG. **6,** it is determined in S602 whether or not a program is currently in the idling state, and if it is not in the idling state, the process is ended in S608. If the program is in the idling state in S602, it is determined in S603 whether or not interchanging of the internal command memory **12** is possible, and if it is not possible, the process is ended in S608. Here, it can be determined whether or not a program is in the idling state and the program can be read ahead, based on the current status of execution of the program. For example, when the processor **11** is in the idling state after decoding is completed, the next decoding is started after a predetermined time unless exception handling is required, and therefore, a program can be read ahead.

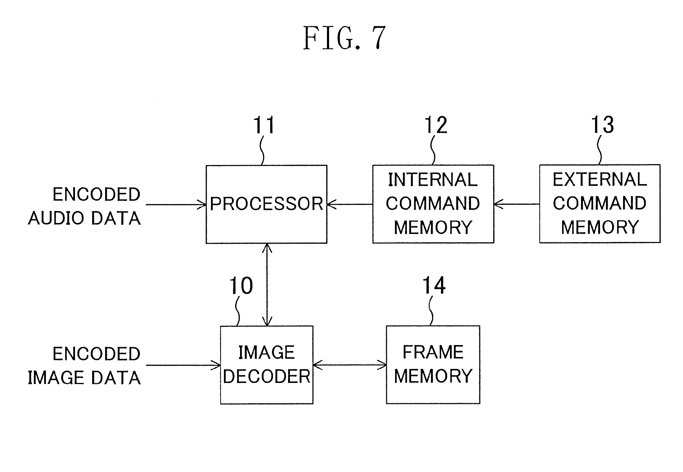

FIG. **7** illustrates an exemplary configuration of an encoded image/audio data decoding apparatus of the present invention. This apparatus decodes image data and audio data encoded with the MPEG technique, in real time. The apparatus is similar to that of FIG. **1,** except that the processor **11** receives encoded audio data.

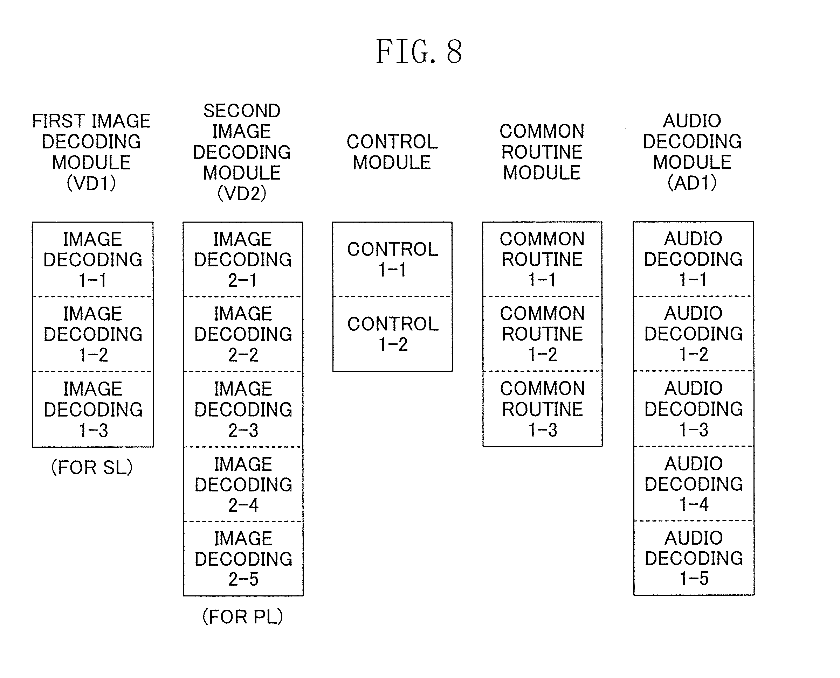

FIG. **8** illustrates a configuration of a program which is executed by the processor **11** of FIG. 7. According to FIG. **8,** the program is divided into five functional modules. Specifically, an audio decoding module (AD1) for decoding encoded audio data is added to the first and second image decoding modules (VD1, VD2), the control module and the common routine module of FIG. 2.

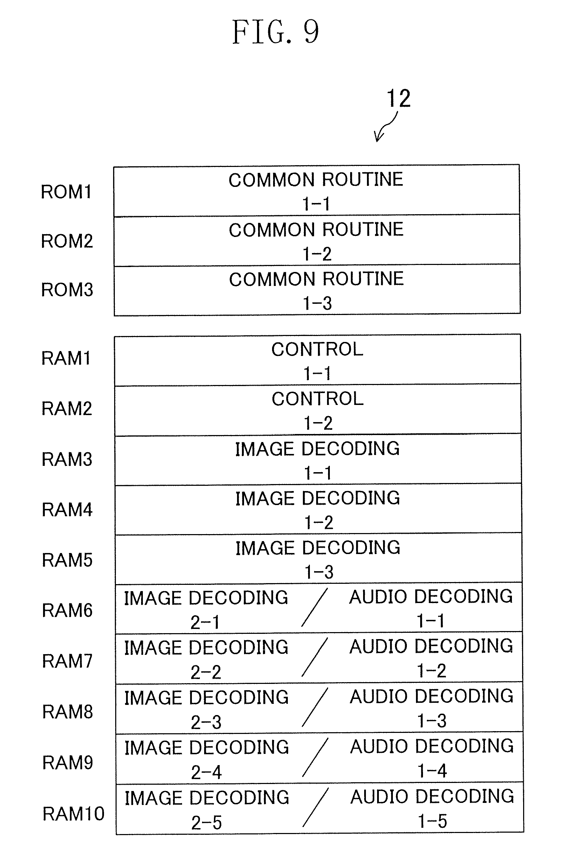

FIG. **9** illustrates an arrangement of program modules in the internal command memory **12** of FIG. 7. It is here assumed that the processor **11** also serves as a DSP, and encoded audio data is decoded by the processor **11.** The second image decoding module (VD2) and the audio decoding module (AD1) of FIG. **8** are used while interchanging therebetween is performed in a portion (RAM6 to RAM10) of a RAM area of the internal command memory **12.** The control module and the first image decoding module (VD1) are placed in a non-interchange area (resident area: RAM1 to RAM5) of the RAM area, and interchanging is not performed during reproduction. The common routine module is assumed to be placed in a ROM area (ROM1 to ROM3) of the internal command memory **12.**

FIG. **10** illustrates an exemplary operation of the encoded image/audio data decoding apparatus of FIG. 7. According to FIG. **10,** initially, in order to start decoding 10 (PL), a program of the second image decoding module (VD2) required at the start of decoding is read into RAM6 to RAM10 of the internal command memory **12.** Thereafter, 10 (PL) is completely decoded before decoding of 10 (SL) is started. In this case, since a program of the first image decoding module (VD1) resides in RAM3 to RAM5 of the internal command memory **12,** the audio decoding module (AD1) for decoding encoded audio data, which is required during a period of decoding 10 (SL), is read into RAM6 to RAM10 of the internal command memory **12.** When 10 (SL) is decoded, since the processor **11** is released from the process of encoded image data during the time when the image decoder **10** decodes the encoded image data, encoded audio data can be decoded. After 10 (SL) is completely decoded, since the second image decoding module (VD2) is required to decode I1 (PL), the program of the second image decoding module (VD2) is read into RAM6 to RAM10 of the internal command memory **12.** Note that the program of the first image decoding module (VD1) resides in RAM3 to RAM5 of the internal command memory **12,** and therefore, after I1 (PL) is completely decoded, the audio decoding module (AD1) for decoding encoded audio data, which is required during the next I1 (SL) decoding period, is read into RAM6 to RAM10 of the internal command memory **12** in advance. Thereafter, a similar operation is repeatedly performed to perform decoding.

Although interchanging is performed with respect to both the decoding programs for encoded image data and encoded audio data in the example of FIGS. 8 to 10, any one of both the decode programs can be placed in a RAM resident area or a ROM area, and interchanging can be performed with respect to only one of both the decoding programs for encoded image data and encoded audio data, so that decoding can also be performed.

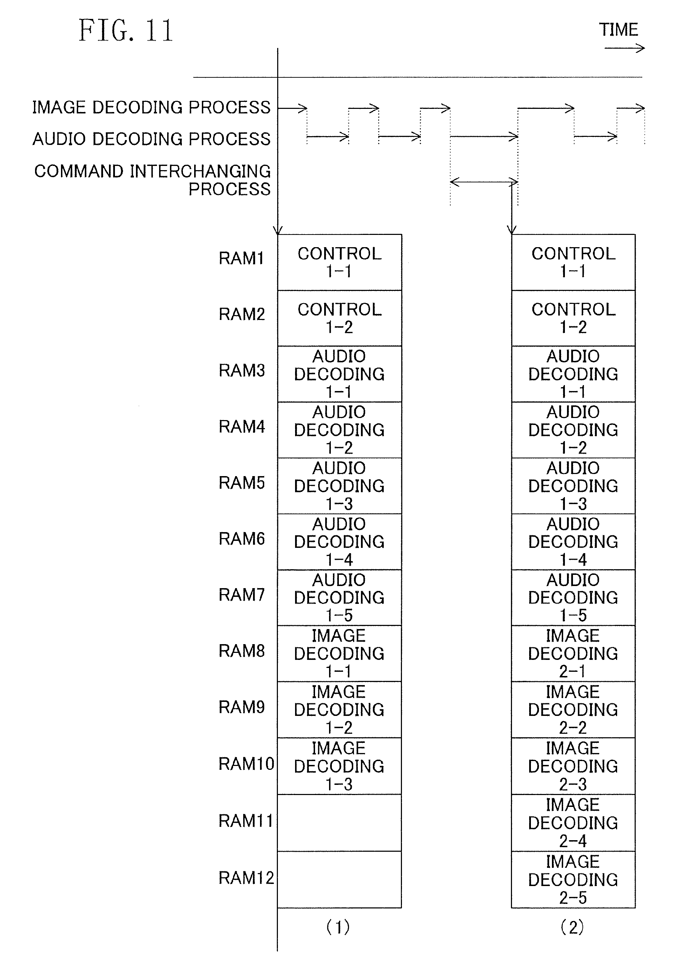

FIG. **11** illustrates another exemplary operation of the encoded image/audio data decoding apparatus of FIG. **7.** According to FIG. **11,** also during the time when interchanging of commands is performed, decoding is performed by the processor **11** accessing a portion other than a sub-module in which interchanging of commands is performed in the internal command memory **12.** In a state (1) of FIG. **11,** sub-modules (i.e., control 1-1 to 1-2, audio decoding 1-1 to 1-5, image decoding 1-1 to 1-3) are stored in RAM1 to RAM10 of the internal command memory **12.** It is here assumed that the first image decoding module (VD1) is switched to the second image decoding module (VD2) (see a state (2) of FIG. **11).** Interchanging with the commands of the second image decoding module (VD2) is performed in RAM8 to RAM 12, while the audio decoding module (AD1) is stored in RAM3 to RAM7. Therefore, if a condition that "the internal command memory **12** is physically divided into blocks, and a bus to the processor **11** and a bus to the external command memory **13** are separately secured, so that, while interchanging of commands is performed in one of different memory blocks, an ordinary access operation can be performed with respect to the other" is satisfied by the internal command memory **12,** an audio decoding process can be performed in parallel to interchanging with the commands of the second image decoding module (VD2) as illustrated in FIG. **11.** Thereby, the processing performance of the processor **11** can be sufficiently exhibited.

Finally, the case where interchanging of programs in the internal command memory **12** of FIG. **7** does not need to be performed in real time, will be described.

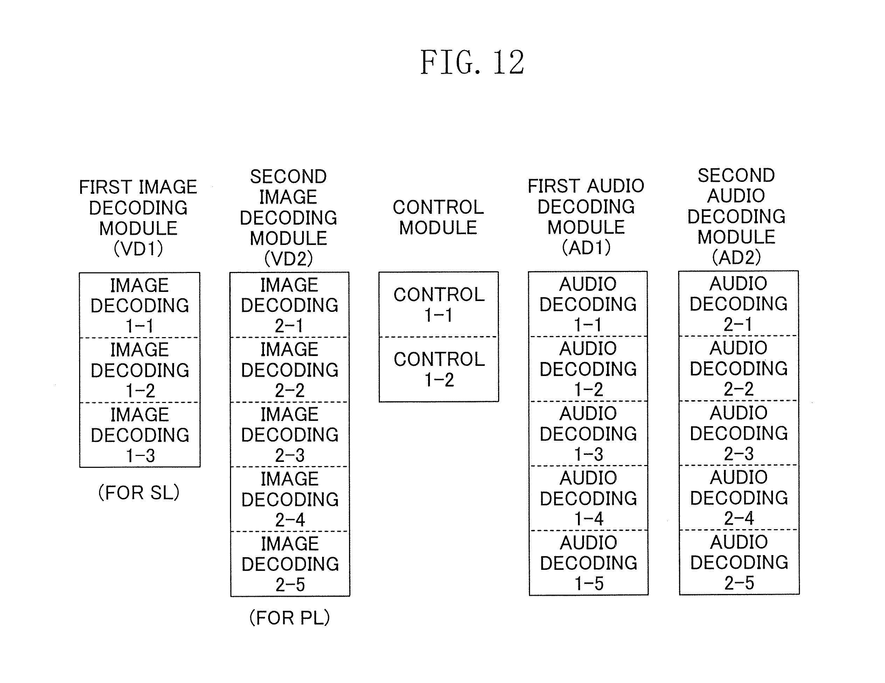

FIG. **12** illustrates another exemplary configuration of a program which is executed by the processor **11** of FIG. 7. According to FIG. **8,** the program is divided into five functional modules. Specifically, a first audio decoding module (AD1) for decoding encoded audio data of a first type and a second audio decoding module (AD2) for decoding encoded audio data of a second type are added to the first and second image decoding modules (VD1, VD2) and the control module of FIG. **2.** The first audio decoding module (AD1) is in conformity with a first audio compression-encoding standard and the second audio decoding module (AD2) is in conformity with a second audio compression-encoding standard.

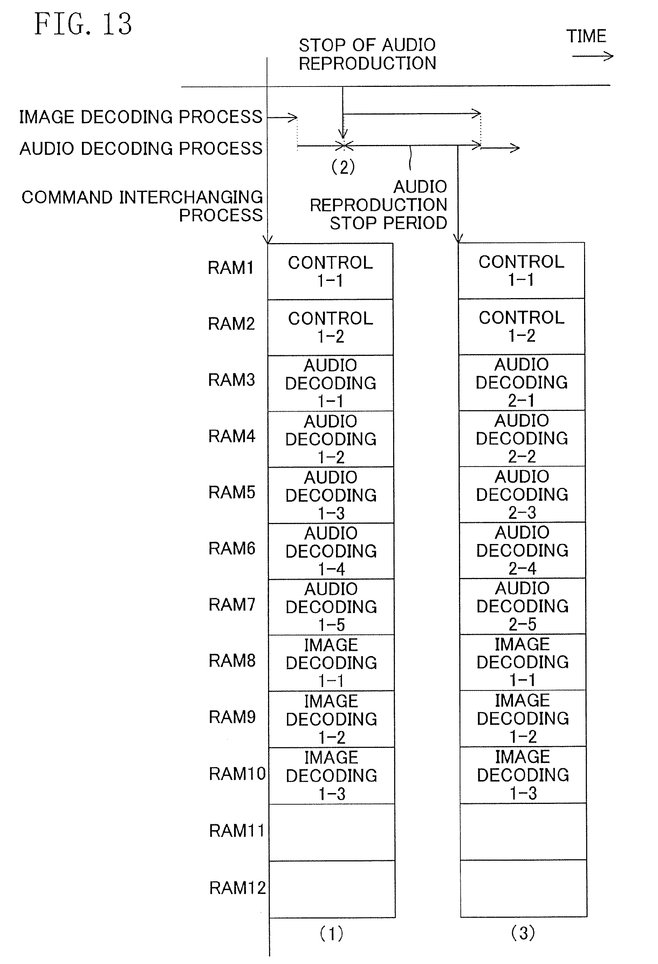

FIG. **13** illustrates an exemplary operation of the encoded image/audio data decoding apparatus of FIG. **7** when the program configuration of FIG. **12** is employed. A state (1) of FIG. **13** is the same as the state (1) of FIG. **11.** It is here assumed that reproduction of audio is switched from the first type to the second type. To this end, the first audio decoding module (AD1) stored in RAM3 to RAM7 of the internal command memory **12** is switched to the second audio decoding module (AD2) (see a state (3) of FIG. **13).** In this case, initially, reproduction of audio is stopped (see an indication (2) of FIG. **13),** and thereafter, the process is shifted to image decoding before interchanging with a program for decoding audio is performed.

Note that interchanging of programs can be performed in the internal command memory 12 after all decoding processes are stopped. This technique can be applied when reproduction applications are interchanged for both image and audio.

Although the embodiments of the present invention have been heretofore described with reference to FIGS. **1** to **13,** the way in which a program is divided is not limited to the examples of FIGS. **2, 8** and **12.** The timing of interchanging programs can be arbitrarily selected, depending on the decoding control method.

Although it has been described in the above examples that the external command memory **13** and the frame memory **14** are separate memories, they may be a physically single memory.

Note that, in the above-described examples, in the case where interchanging is required in the internal command memory **12,** if there is a sub-module already read into the internal command memory **12,** the already read sub-module is not read. Alternatively, the already read sub-module can also be similarly read.

The present invention can be applied to any compression-encoding techniques, such as ISO/IEC 14496 and the like, in addition to ISO/IEC11172, 13818.

### INDUSTRIAL APPLICABILITY

As described above, the encoded data decoding apparatus of the present invention can reduce the capacity of an internal command memory, and is useful as a digital television and the like.

## Claims

1. An encoded data decoding apparatus for use in reproduction of compression-encoded image data, comprising:
an image decoding means for decoding encoded image data;
a processor means having a function of controlling an operation of the image decoding means; and
an internal command memory means for storing a program to be executed by the processor means,
wherein a program used in decoding of encoded image data is divided into module units, and encoded image data is decoded while interchanging programs in the internal command memory means for each predetermined command memory transfer unit.

2. The encoded data decoding apparatus of claim 1, wherein
the processor means further has a function of sharing and performing a portion of a process of decoding encoded image data.

3. The encoded data decoding apparatus of claim 1, further comprising:
an external command memory means for storing all programs to be transferred to a RAM area of the internal command memory means.

4. The encoded data decoding apparatus of claim 1, further comprising:
a storing means for storing decoded data outputted from the image decoding means.

5. The encoded data decoding apparatus of claim 1, wherein
the internal command memory means is previously divided into a plurality of blocks, and when interchanging of programs is performed, a command memory area of a block of the internal command memory means other than a block or blocks of the internal command memory means in which programs are interchanged, can be normally accessed from the processor means.

6. The encoded data decoding apparatus of claim 1, wherein
the internal command memory means has a RAM area and a ROM area.

7. The encoded data decoding apparatus of claim 6, wherein
in the ROM area, a program which can be used in common for each encoded image data is provided irrespective of the type of encoded image data.

8. The encoded data decoding apparatus of claim 1, wherein
an area of the internal command memory means is divided into a resident area in which interchanging of programs is not performed during reproduction of encoded image data, and a command interchanging area in which interchanging of programs is performed during reproduction of encoded image data, before the internal command memory means is used.

9. The encoded data decoding apparatus of claim 1, wherein
when interchanging of programs is performed in the internal command memory means, the divided module-unit programs are further divided into predetermined sub-module units, and it is determined whether or not a sub-module-unit program is already stored in the internal command memory means for each sub-module, and when a sub-module-unit program is already stored in the internal command memory means, the sub-module-unit program is not newly read.

10. The encoded data decoding apparatus of claim 1, wherein
when the processor means is in an idling state, a program to be next executed is read ahead into the internal command memory means.

11. The encoded data decoding apparatus of claim 1, wherein
the encoded data decoding apparatus is used for reproduction of compression-encoded audio data as well as encoded image data, and
a program used in decoding of encoded audio data is divided into module units, and encoded image and audio data are decoded while interchanging programs in the internal command memory means for each predetermined command memory transfer unit.

12. The encoded data decoding apparatus of claim 11, wherein
when decoding of encoded image data is executed by the image decoding means, a process of the processor means is allocated for decoding of encoded audio data.

13. The encoded data decoding apparatus of claim 12, wherein
at least a portion of a program which performs a process of decoding encoded image data is placed in a resident area or a ROM area of the internal command memory means, thereby performing switching of programs of the process of decoding encoded image data and a process of decoding encoded audio data without an overhead.

14. An encoded data decoding apparatus for use in reproduction of compression-encoded image data, comprising:
an image decoding means for decoding encoded image data;
a processor means having a function of controlling an operation of the image decoding means; and
an internal command memory means for storing a program to be executed by the processor means,
wherein, when a program used in decoding of encoded image data is placed into the internal command memory means for interchanging of programs, the interchanging of programs is performed by interrupting reproduction of encoded image data.

15. The encoded data decoding apparatus of claim 14, wherein
the processor means further has a function of sharing and performing a portion of a process of decoding encoded image data.

16. The encoded data decoding apparatus of claim 14, further comprising:
an external command memory means for storing all programs to be transferred to a RAM area of the internal command memory means.

17. The encoded data decoding apparatus of claim 14, further comprising:
a storing means for storing decoded data outputted from the image decoding means.

18. The encoded data decoding apparatus of claim 14, wherein
the encoded data decoding apparatus is used for reproduction of compression-encoded audio data as well as encoded image data, and
when a program used in decoding of encoded audio data is placed into the internal command memory means for interchanging of programs, the interchanging of programs is performed by interrupting reproduction of encoded audio data.

19. The encoded data decoding apparatus of claim 18, wherein
when interchanging of programs is performed in the case where a plurality of applications are controlled using the processor means, interchanging of programs is executed while continuing reproduction of an application for which interchanging of pro grams is not performed.
